# EUROPÄISCHE PATENTSCHRIFT

(11) **EP 2 546 541 B1**
(45) Veröffentlichungstag und Bekanntmachung des Hinweises auf die Patenterteilung: **09.09.2015**
(21) Anmeldenummer: 12175876.7
(22) Anmeldetag: 11.07.2012
(51) Int. Cl.: F16D 65/56, F16D 65/18

(54) **Baugruppen einer Scheibenbremse**
Composants d'un frein à disque
Components of a disc brake

(30) Priorität: 14.07.2011 DE 102011107151
(43) Veröffentlichungstag der Anmeldung: 16.01.2013
(73) Patentinhaber: KNORR-BREMSE Systeme für Nutzfahrzeuge GmbH, 80809 München (DE)
(72) Erfinder: Gruber, Markus, 85560 Ebersberg (DE); Pritz, Wolfgang, 80637 München (DE); Stich, Johann, 94560 Offenberg/Aschenau (DE)
(74) Vertreter: Mattusch, Gundula

(56) Entgegenhaltungen:
- EP-A1- 2 410 198
- EP-A2- 1 160 476
- EP-A2- 1 160 479
- EP-A2- 1 160 480
- DE-A1-102010 026 076

## Beschreibung

Die Erfindung betrifft Baugruppen einer Scheibenbremse nach dem Oberbegriff des Anspruchs 1.

Diese Baugruppen sind mit ihren wesentlichen Funktionsteilen im Innern eines Bremssattels angeordnet, wobei eine Baugruppe die Komponenten einer Zuspanneinrichtung umfasst, mit einer Brücke, in der Stellspindeln verdrehbar gehalten sind, die an Druckstücke angreifen, mit denen bei einer Bremsung ein anliegender Bremsbelag gegen eine Bremsscheibe pressbar ist. Als weitere Komponente ist eine Verschlussplatte vorhanden, mit der der Bremssattel auf seiner dem Bremsbelag zugewandten Seite verschlossen ist und die Durchtrittsöffnungen für die Stellspindeln aufweist, wobei diese Durchtrittsöffnungen durch Faltenbälge abgedichtet sind, so dass das Innere des Bremssattels im Wesentlichen gegen Verschmutzungen geschützt ist.

Im Übrigen ist zwischen der Verschlussplatte und der Brücke eine Druckfeder angeordnet, die sich einerseits an der mit dem Bremssattel verbundenen Verschlussplatte und andererseits an der Brücke abstützt und mit der die Brücke in Nichtfunktion der Bremse in ihre Ausgangsstellung rückführbar ist.

Bei einer Betätigung der Bremse wird ein Bremshebel, der einerseits an der Brücke und andererseits an der Rückwand des Bremssattels anliegt, um einen Exzenter verschwenkt, wobei der Bremshebel ebenso wie ein Wälzlager zwischen dem Bremshebel, d.h., dem Exzenter und der Rückwand des Bremssattels, nicht zur Baugruppe der Zuspanneinrichtung im Sinne der Gattung zählen.

Eine weitere Baugruppe beinhaltet Komponenten einer Nachstelleinrichtung, wozu in den Stellspindeln verdrehsicher gehaltene Stellelemente zählen, sowie eine Synchronisiereinrichtung, mit denen bei Betätigung eines Stellelementes auch das andere Stellelement synchron verstellt wird, wobei die Synchroneinrichtung einen Zugmitteltrieb, beispielsweise in Form einer Kette und mit den Stellelementen verbundene Kettenräder aufweist.

Der Zugmitteltrieb, also beispielsweise die besagte Kette, ebenso wie die Kettenräder, sind außenseitig des Bremssattels angeordnet und von einem Verschlussdeckel abgedeckt, der mit dem Bremssattel verbunden ist, üblicherweise durch Verschrauben. Dieser Verschlussdeckel weist im Übrigen eine Einrichtung zur Verschleißerkennung auf, mit der ein Bremsbelagverschleiß erkennbar und mittels der Nachstelleinrichtung ausgleichbar ist, so dass zwischen den Bremsbelägen und der Bremsscheibe ein konstantes Lüftspiel eingehalten werden kann.

Eine solche pneumatisch und oder elektromechanisch betätigbare Scheibenbremse ist aus der DE 93 12 119 bekannt.

Zum Austausch von außen liegenden Bauteilen, wie Führungen oder Dichtungen, sind definierte Reparatursätze erhältlich, die problemlos bei Bedarf montiert werden können.

Durch Verschmutzung oder eintretende Feuchtigkeit können innen liegende Bauteile, insbesondere die der genannten Baugruppen so weit vorgeschädigt sein, dass sie ausgetauscht werden müssen. Allerdings sind dafür spezielle Kenntnisse und Vorrichtungen vonnöten, die ausschließlich in dafür autorisierten Werkstätten vorgenommen werden dürfen.

Naturgemäß ist dies nur mit einem erheblichen Aufwand möglich, wobei die Komponenten der einzelnen Baugruppen jeweils einzeln zu montieren sind. Zu den sich daraus ergebenden relativ hohen Montagekosten addieren sich noch die Kosten, die sich daraus ergeben, dass ein Austausch nur in bestimmten Werkstätten erfolgen kann.

Um den Einbau der Baugruppen zu erleichtern, ist es aus dem Stand der Technik bekannt, Baugruppen, insbesondere die einer Zuspanneinrichtung, als vormontierte Baueinheit bereitzustellen, die im Bedarfsfall in den Bremssattel eingesetzt wird.

Zur Fixierung der Komponenten in der Baugruppe, insbesondere um deren Transport und deren Einbau zu erleichtern, sind Sicherungselemente in Form von Klammern vorgesehen, die nach dem Einbau entfernt werden (EP 1 160 479 A2).

Als Schutz der Komponenten vor äußeren Einflüssen, beispielsweise vor Schlägen beim Transport, die zu einer Beschädigung der Komponenten führen können, sind die bekannten Sicherungselemente jedoch nicht geeignet.

Der Erfindung liegt die Aufgabe zugrunde, Baugruppen der gattungsgemäßen Art so weiterzuentwickeln, dass ihr Schutz vor Beschädigungen vor der Montage verbessert wird.

Diese Aufgabe wird durch Baugruppen mit den Merkmalen des Anspruchs 1 gelöst.

Somit werden Reparaturmodule geschaffen, die mit Standardwerkzeugen, wie sie in einschlägigen Werkstätten vorhanden sind, eingebaut werden können. D.h., es sind weder Sonderwerkzeuge, noch ist ein spezielles Montage-Wissen erforderlich. Im Übrigen können die Komponenten der Baugruppen werksseitig entsprechend ihrer Funktion eingestellt und geprüft werden, wobei mittels der Sicherungselemente die Komponenten derart fixiert sind, dass deren Einstellungen sowohl während des Transports wie auch während der Montage erhalten bleiben.

Durch die gemäß der Erfindung deckelartige Ausbildung der Sicherungselemente, die bevorzugt an den sich gegenüberliegenden Seiten der Baugruppen befestigt sind, ist ein Schutz für die Komponenten geschaffen, durch den deren Beschädigung während des Transports oder einer Lagerung vermieden wird.

Bevorzugt ragen die Sicherungselemente randseitig über die Außenkontur der angeschlossenen Komponenten hinaus, wodurch die Sicherungselemente praktisch einen Kantenschutz bilden.

Nach einem weiteren Gedanken der Erfindung sind die Sicherungselemente mit den entsprechenden Komponenten der jeweiligen Baugruppe durch Verklipsen verbunden und werden unmittelbar vor der Montage der jeweiligen Baugruppe entfernt.

Die deckelartige Ausbildung der Sicherungselemente, die bevorzugt aus Kunststoff hergestellt sind, ermöglicht insbesondere den Schutz von Komponentenöffnungen, beispielsweise der offenen Stirnseiten der als Gewinderohre ausgebildeten Stellspindeln, in die in Funktion ein Nachsteller und ein Mitnehmer der Nachstelleinrichtung eingeführt sind.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Baugruppe in einer perspektivischen Ansicht
- Figur 2: die Baugruppe gemäß Figur 1 in einer Explosivdarstellung
- Figur 3: eine weitere Baugruppe, ebenfalls in einer Sprengbilddarstellung.

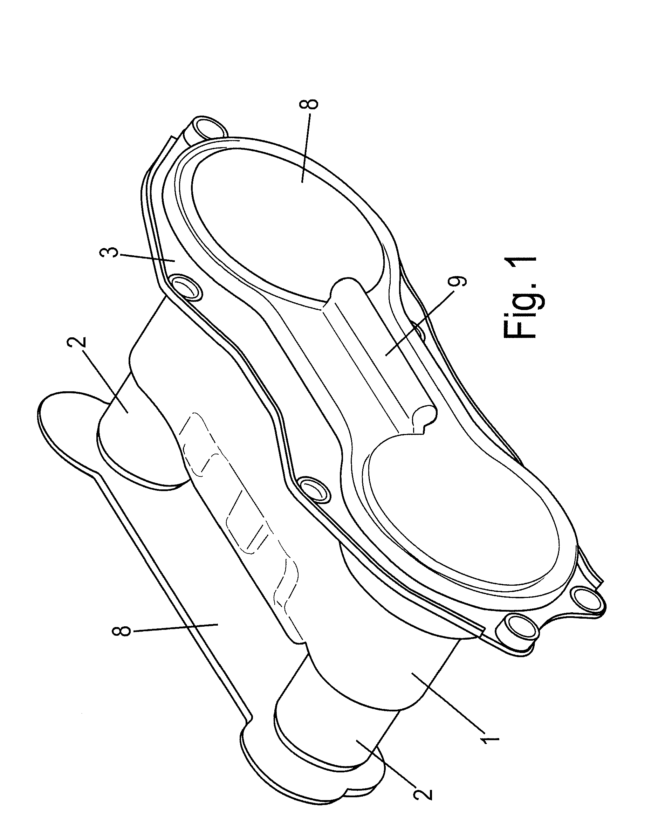

In der Figur 1 ist eine erste Baugruppe einer Scheibenbremse für ein Nutzfahrzeug dargestellt, die als eine vormontierte Baueinheit ausgebildet ist.

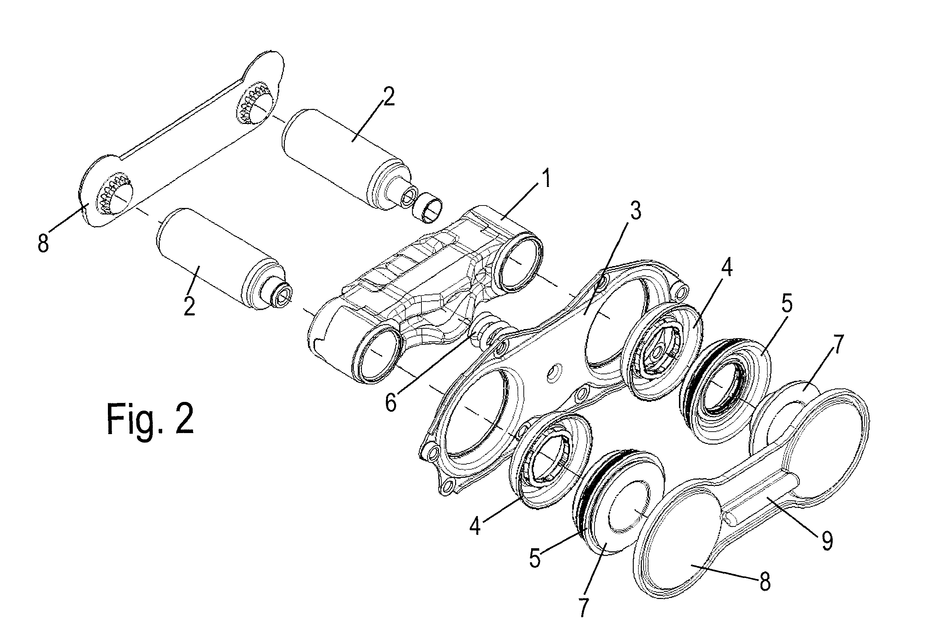

Dabei besteht diese Baugruppe aus Komponenten, wie sie im Einzelnen in der Figur 2 erkennbar sind und die einen wesentlichen Teil einer Zuspanneinrichtung bilden, die im Innern eines nicht dargestellten Bremssattels positionierbar ist.

Zu diesen Komponenten zählen eine Brücke 1, an der ein nicht gezeigter, sich andererseits am Rücken des genannten Bremssattels abstützender Bremshebel anliegt und der als separates Teil vorliegt, ebenso wie eine Wälzlagerung, mittels der sich der Bremshebel am Bremssattel abrollen kann. Prinzipiell denkbar ist jedoch, dass dieser Bremshebel, ebenso wie die zugehörige Wälzlagerung, ebenfalls Bestandteil der Baugruppe sind.

Weiter gehören dazu zwei parallel und abständig zueinander angeordnete Stellspindeln 2, die als Schraubhülsen mit Außengewinde in die Brücke 1 eingedreht sind und die endseitig eine Verschlussplatte 3 durchtreten, an der im Durchtrittsbereich der Stellspindeln 2 Halterungen 4 festgelegt sind.

Diese Halterungen 4 dienen der Befestigung von Faltenbälgen 5, die andererseits an Druckstücken 7 relativ dazu verdrehbar angeschlossen sind, wobei die Druckstücke 7 mit den Stellspindeln 2 verbunden sind. Die Faltenbälge 5 dienen der Abdichtung der Durchtrittsöffnungen der Verschlussplatte 3 zwischen den Druckstücken 7 und der Brücke 1.

Als weiteres Funktionsteil ist zwischen der Brücke 1 und der Verschlussplatte 3 eine Druckfeder 6 vorgesehen, mit der beim Lösen der Bremse die Brücke 1 sowie die angeschlossenen Stellspindeln 2 und die Druckstücke 7 aus ihrer Bremsposition herausgedrückt werden.

Werksseitig werden die Komponenten für eine funktionsrelevante Position eingestellt. Um diese Stellung zu fixieren, bis die Baugruppe in den Bremssattel eingesetzt wird, sind Sicherungselemente 8 vorgesehen, die an den sich gegenüberliegenden Seiten der Baugruppe vorzugsweise durch Verklipsen befestigt sind, wobei im Beispiel nach den Figuren 1 und 2 die Sicherungselemente 8 deckelförmig ausgebildet und einerseits mit den Stellspindeln 2 und andererseits mit den Druckstücke 7 verbunden sind.

Von den beiden Sicherungselementen 8, die zweckmäßigerweise aus Kunststoff gebildet sind, weist das den Druckstücken 7 zugeordnete eine angeformte Griffleiste 9 auf, die sowohl als Tragegriff dient wie auch der Abnahme des Sicherungselementes 8 vor einer Montage.

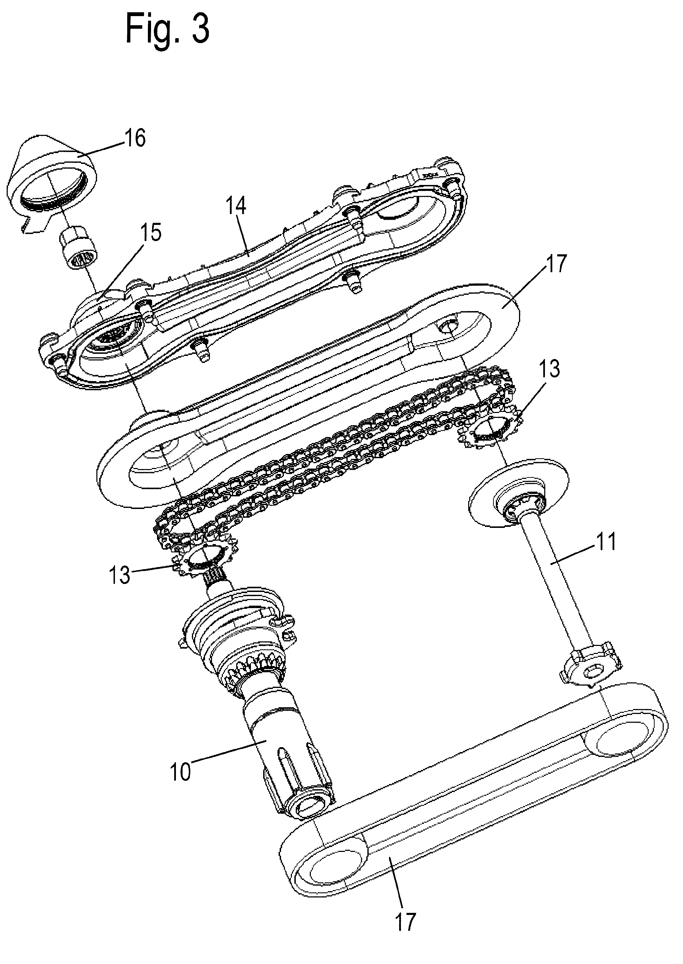

Die in der Figur 3 mit ihren Komponenten dargestellte Baugruppe bildet als Funktionseinheit eine Nachstelleinrichtung, mit Stellelementen, gebildet aus einem Nachsteller 10 und einem parallel und abständig dazu verlaufenden Mitnehmer 11, die beide spindelförmig ausgebildet sind und in montierter Stellung in die Stellspindeln 2 eingreifen, um diese bei Betätigung der Nachstelleinrichtung zu verdrehen.

An den, in eingebauter Stellung den Stellspindeln abgewandten Enden der Stellelemente sind als Zugmitteltrieb Kettenräder 13 montiert, auf denen eine Kette 12 zur synchronen Verstellung des Nachstellers 10 und des Mitnehmers 11 geführt ist.

Die Kette 12 wird abgedeckt durch einen Verschlussdeckel 14, der nach einer Montage mit dem Bremssattel verschraubt ist und der einen durch eine Kappe 16 abgedeckten Verschleißerkenner 15 aufweist.

Vergleichbar der Figur 1 ist auch die in der Figur 3 gezeigte Baugruppe als Baueinheit vormontiert, wobei gleichfalls zwei deckelförmige Sicherungselemente 17 vorgesehen sind, von denen eines auf die Stellelemente aufgeklipst ist, während das andere zwischen dem Verschlussdeckel 14 und der Kette 12 angeordnet ist.

Dieses Sicherungselement 17 ist vergleichbar dem Verschlussdeckel 14 geformt, d.h., es ist eine Aufnahme für die Kette 12 geschaffen, die eine exakt eingestellte Position der Kette 12 bis zur Montage gewährleistet.

Das die Kette 12 überdeckende Sicherungselement 17 ist mit dem Nachsteller 10 und dem Mitnehmer 11 verrastet, während der Verschlussdeckel 14 auf dem Sicherungselement 17 fixiert ist.

Zur Montage der Baugruppe wird der Verschlussdeckel 14 von dem zugeordneten Sicherungselement 17 gelöst und nach dessen Entfernen über die Kette 12 gestülpt und mit dem Bremssattel außenseitig verschraubt.

Im Übrigen durchtreten der Nachsteller 10 und der Mitnehmer 11 mit ihren den Kettenrädern 13 zugewandten Enden den Bremssattel, so dass die Kettenräder 13 ebenso wie die Kette 12 außerhalb des Bremssattels positioniert sind.

Prinzipiell sind bei Bedarf auch andere, den Baugruppen zuzuordnende Funktionsteile in die vormontierte Baueinheit aufzunehmen bzw. können entfallen. Beispielhaft sei hierzu genannt, dass die Druckstücke integraler Bestandteil des Bremsbelages sein können, so dass sie nicht als separate Teile in der vormontierten Baueinheit vorgesehen werden.

### Bezugszeichenliste

- 1: Brücke
- 2: Stellspindel
- 3: Verschlussplatte
- 4: Halterung
- 5: Faltenbalg
- 6: Druckfeder
- 7: Druckstück
- 8: Sicherungselement
- 9: Griffleiste
- 10: Nachsteller
- 11: Mitnehmer
- 12: Kette
- 13: Kettenrad
- 14: Verschlussdeckel
- 15: Verschleißerkenner
- 16: Kappe
- 17: Sicherungselement

## Patentansprüche

1. Baugruppen einer Scheibenbremse für ein Nutzfahrzeug, wobei eine der Baugruppen durch Komponenten einer Zuspanneinrichtung und eine andere Baugruppe durch Komponenten einer Nachstelleinrichtung gebildet ist, wobei zumindest eine der Baugruppen als vormontierte Baueinheit ausgebildet ist, deren Komponenten durch nach oder unmittelbar vor einer Montage der Baueinheit entfernbare Sicherungselemente (8, 17) fixiert sind, **dadurch gekennzeichnet, dass** die Sicherungselemente (8, 17) deckelartig ausgebildet sind.

2. Baugruppen nach Anspruch 1, **dadurch gekennzeichnet, dass** die Sicherungselemente (8, 17) an zwei sich gegenüberliegenden Seiten der Baueinheit angeordnet sind.

3. Baugruppen nach Anspruch 1 oder 2, **dadurch gekennzeichnet, dass** die Sicherungselemente (8, 17) mit Komponenten der Baueinheit lösbar verrastet sind.

4. Baugruppen nach einem der vorhergehenden Ansprüche, **dadurch gekennzeichnet, dass** die die Zuspanneinrichtung bildende Baugruppe folgende Komponenten enthält:
- eine Brücke (1), an der sich in montierter Stellung ein Bremshebel abstützt,
- zumindest eine, vorzugsweise zwei parallel und abständig zueinander angeordnete, verdrehbar in der Brücke (1) gehaltene Stellspindeln (2),
- eine Verschlussplatte (3), die von den Stellspindeln (2) durchtreten ist,
- eine zwischen der Brücke (1) und der Verschlussplatte (3) angeordnete Druckfeder (6),
- Druckstücke (7), die an den Stellspindeln (2) angeschlossen sind,
- jedem Druckstück (7) zugeordnet ein Faltenbalg (5), der einerseits an der Verschlussplatte (3) gehalten und am Druckstück (7) angeschlossen ist.

5. Baugruppen nach einem der vorhergehenden Ansprüche, **dadurch gekennzeichnet, dass** die die Nachstelleinrichtung bildende Baugruppe folgende Komponenten aufweist:
- einen Nachsteller (10) und einen parallel und abständig dazu angeordneten Mitnehmer (11), wobei der Nachsteller (10) und der Mitnehmer (11) jeweils in einer der Stellspindeln (2) verdrehsicher und axial verschiebbar gehalten sind,
- einen mit dem Nachsteller (10) und dem Mitnehmer (11) in Eingriff stehenden Zugmitteltrieb,
- einen den Zugmitteltrieb überdeckenden Verschlussdeckel (14) mit einer Verschleißerkennung (15).

6. Baugruppen nach einem der vorhergehenden Ansprüche, **dadurch gekennzeichnet, dass** eines der Sicherungselemente (17) entsprechend dem Verschlussdeckel (14) geformt ist und den Zugmitteltrieb überdeckt.

7. Baugruppen nach einem der vorhergehenden Ansprüche, **dadurch gekennzeichnet, dass** der Verschlussdeckel (14) mit dem Sicherungselement (17) auf der dem Zugmitteltrieb gegenüberliegenden Seite verrastet ist.

8. Baugruppen nach einem der vorhergehenden Ansprüche, **dadurch gekennzeichnet, dass** die Sicherungselemente (8, 17) einen gegenüber der jeweils angeschlossenen Komponente überstehenden Rand aufweist.

9. Baugruppen nach einem der vorhergehenden Ansprüche, **dadurch gekennzeichnet, dass** zumindest eines der Sicherungselemente (8, 17) an der der zugeordneten Komponente abgewandten Seite eine Griffleiste (9) aufweist.

10. Baugruppen nach einem der vorhergehenden Ansprüche, **dadurch gekennzeichnet, dass** die Sicherungselemente (8, 17) aus Kunststoff bestehen.

11. Baugruppen nach einem der vorhergehenden Ansprüche, **dadurch gekennzeichnet, dass** die Komponenten der Baugruppen werksseitig, entsprechend ihrer Funktion, voreingestellt und geprüft sind.

## Claims

1. Assemblies of a disc brake for a commercial vehicle, wherein one of the assemblies is represented by components of an application device and another assembly is represented by components of an adjusting device, wherein at least one of the assemblies is configured as a pre-assembled unit, the components of which are located by securing elements (8, 17) which can be removed after or immediately before the unit is mounted, **characterised in that** the securing elements (8, 17) are designed to be lid-shaped.

2. Assemblies according to claim 1, **characterised in that** the securing elements (8, 17) are located on two opposite sides of the unit.

3. Assemblies according to claim 1 or 2, **characterised in that** the securing elements (8, 17) are releasably latched to components of the unit.

4. Assemblies according to any of the preceding claims, **characterised in that** the assembly representing the application device comprises the following components:
- a bridge (1), on which a brake lever is supported in the assembled position,
- at least one and preferably two actuating spindles (2) arranged parallel to and at a distance from one another and rotatably held in the bridge (1),
- a closing plate (3), through which the actuating spindles (2) pass,
- a compression spring (6) located between the bridge (1) and the closing plate (3),
- pressure pads (7) connected to the actuating spindles (2),
- assigned to each pressure pad (7), a bellows (5) held on the closing plate (3) on one side and connected to the pressure pad (7).

5. Assemblies according to any of the preceding claims, **characterised in that** the assembly representing the adjusting device comprises the following components:
- an adjuster (10) and a driver (11) arranged parallel to and at a distance from the former, wherein the adjuster (10) and the driver (11) are each held in one of the actuating spindles (2) in a non-rotatable and axially displaceable manner,
- a chain drive in engagement with the adjuster (10) and the driver (11),
- a closing cover (14) covering the chain drive and comprising a wear indicator (15).

6. Assemblies according to any of the preceding claims, **characterised in that** one of the securing elements (17) is shaped in accordance with the closing cover (14) and covers the chain drive.

7. Assemblies according to any of the preceding claims, **characterised in that** the closing cover (14) is latched to the securing element (17) on the side opposite the chain drive.

8. Assemblies according to any of the preceding claims, **characterised in that** the securing elements (8, 17) have an edge which projects beyond the respective connected component.

9. Assemblies according to any of the preceding claims, **characterised in that** at least one of the securing elements (8, 17) has a handle bar (9) on the side remote from the associated component.

10. Assemblies according to any of the preceding claims, **characterised in that** the securing elements (8, 17) are made of a plastic material.

11. Assemblies according to any of the preceding claims, **characterised in that** the components of the assemblies are pre-adjusted and checked in accordance with their function in the factory.

## Revendications

1. Modules d'un frein à disque pour un véhicule utilitaire, dans lesquels l'un des modules est formé par des éléments d'un dispositif de serrage et un autre module par des éléments d'un dispositif de rattrapage de jeu, au moins l'un des modules étant constitué sous la forme d'une unité de construction prémontée, dont les éléments sont immobilisés par des éléments (8, 17) d'arrêt pouvant être retirés après ou juste avant un montage de l'unité de construction, **caractérisés en ce que** les éléments (8, 17) d'arrêt sont constitués à la manière de couvercles.

2. Modules suivant la revendication 1, **caractérisés en ce que** les éléments (8, 17) d'arrêt sont disposés sur deux côtés opposés l'un à l'autre de l'unité de construction.

3. Modules suivant la revendication 1 ou 2, **caractérisés en ce que** les éléments (8, 17) d'arrêt peuvent être encliquetés de manière amovible à des éléments de l'unité de construction.

4. Modules suivant l'une des revendications précédentes, **caractérisés en ce que** les modules formant le dispositif de serrage comporte les éléments suivants :
- un pontet (1), sur lequel un levier de frein s'appuie en la position montée,
- au moins une, de préférence deux, broches de réglage disposées parallèlement et à distance l'une de l'autre et maintenues avec possibilité de torsion dans le pontet (1),
- une plaque (3) de fermeture, qui est traversée par les broches (2) de réglage,
- un ressort (6) de compression disposé entre le pontet (1) et la plaque (3) de fermeture,
- des pièces (7) d'application d'une pression, qui sont raccordées aux broches (2) de réglage,
- associé à chaque pièce (7) d'application d'une pression un soufflet (5), qui est maintenu, d'une part, à la plaque (3) de fermeture et qui est raccordé à la pièce (7) d'application d'une pression.

5. Modules suivant l'une des revendications précédentes, **caractérisés en ce que** le module formant le dispositif de rattrapage de jeu a les éléments suivants :
- un rattrapeur (10) de jeu et un toc (11) d'entraînement disposé parallèlement et à distance de celui-ci, le .rattrapeur (10) de jeu et le toc (11) d'entraînement étant maintenus respectivement avec possibilité de coulissement axial et sans possibilité de torsion respectivement dans l'une des broches (2) de réglage,
- un moyen de traction en prise avec le rattrapeur (10) de jeu et le toc (11) d'entraînement,
- un couvercle (14) de fermeture ayant une détection (15) d'usure recouvrant le moyen de traction.

6. Modules suivant l'une des revendications précédentes, **caractérisés en ce que** l'un des éléments (17) de sécurité est conformé conformément au couvercle (14) de fermeture et recouvre le moyen de traction.

7. Modules suivant l'une des revendications précédentes, **caractérisés en ce que** le couvercle (14) de fermeture est, du côté opposé au moyen de traction, encliqueté avec l'élément (17) de sécurité.

8. Modules suivant l'une des revendications précédentes, **caractérisés en ce que** les éléments (8, 17) de sécurité ont un bord en saillie par rapport à l'élément raccordé respectivement.

9. Modules suivant l'une des revendications précédentes, **caractérisés en ce qu'**au moins l'un des éléments (8, 17) de sécurité a une réglette (9) de préhension du côté éloigné de l'élément associé.

10. Modules suivant l'une des revendications précédentes, **caractérisés en ce que** les éléments (8, 17) de sécurité sont en matière plastique.

11. Modules suivant l'une des revendications précédentes, **caractérisés en ce que** les éléments des modules sont réglés à l'avance et contrôlés en usine en ce qui concerne leur fonctionnement.
